Europäisches Patentamt

European Patent Office

Office européen des brevets

(11) Publication number: **0 338 129**
**A2**

## EUROPEAN PATENT APPLICATION

(21) Application number: **88120618.9**

(22) Date of filing: **09.12.88**

(51) Int. Cl.⁴: **H04L 11/16 , H04L 5/14 , H04B 3/23**

(30) Priority: **22.04.88 US 185191**

(43) Date of publication of application:
**25.10.89 Bulletin 89/43**

(84) Designated Contracting States:
**DE FR GB IT**

(71) Applicant: **Hewlett-Packard Company**
**3000 Hanover Street**
**Palo Alto California 94304(US)**

(72) Inventor: **Huang, Fred G.**
**1538 Zapata Drive**
**Folsom, CA 95630(US)**

(74) Representative: **Liesegang, Roland, Dr.-Ing. et al**
**FORRESTER & BOEHMERT**
**Widenmayerstrasse 4**
**D-8000 München 22(DE)**

(54) **Transceiver-coupler for one-pair cabling of a high-speed network.**

(57) A coupler (10) suitable for connection of a transceiver to a local-area network (LAN) the nodes of which are interconnected by single unshielded twisted-pair wires (12). The coupler is constructed of inexpensive components yet supports communication rates of ten million bits per second. The coupler avoids "collisions" which would otherwise occur when using single 2-wire pairs. A transmit-sensing portion (52) of the coupler detects operation of the transmitter portion of the transceiver and forces a pair of transistors (32,34) to a state in which one transistor is conducting and the other is non-conducting. A resistor (22) connected to the non-conducting transistor develops a signal across its terminals approximately equal to zero voltage. The signal across the resistor is applied to the inverting and non-inverting inputs of an operational amplifier (62) which generates a signal conducted to the receiver portion of the transceiver. In this way, during transmission the coupler assures that no signal will be received by the transceiver. The transmit-sensing portion (52) will also detect disablement of the transmitter portion, and will cause the formerly non-conducting transistor to become saturated; in turn causing the signal across the resistor terminals to equal any signal received over the network from another transmitter. This signal will be applied to the operational amplifier, and in turn, to the receiver portion of the transceiver.

FIG. 2

## TRANSCEIVER COUPLER FOR ONE-PAIR CABLING OF A HIGH-SPEED NETWORD

### CROSS-REFERENCE TO RELATED, CO-PENDING APPLICATIONS

Co-pending applications of particular interest to the instant application are U.S. Ser. No. 084,960, filed August 13, 1987, on behalf of Fred G. Huang entitled "Crosstalk Reduction in Unshielded Twisted-Pair Lines" and U.S. Ser. No. 084,961, filed August 13, 1987, on behalf of Fred G. Huang entitled "Non-Linear Squelch Circuit for IEEE 802.3 Protocol", both commonly assigned with the instant application.

### FIELD OF THE INVENTION

The present invention relates to local area network communication circuitry and, more particularly, to a coupler circuit connecting a transceiver to a high-speed local area network interconnected by ordinary twisted-pair wires.

### BACKGROUND OF THE INVENTION

Electronic equipment is connected to a network via a bidirectional amplifier, providing one path for transmission of data onto the network and another path for receiving data from the network. Accordingly, such bidirectional amplifiers are called transceivers, an abbreviation of transmitter and receiver.

In low-speed telephony, a 4-wire to 2-wire terminating set is used to interconnect the bidirectional amplifier, the transmit and receive side of which each utilize a 2-wire path, to the single 2-wire pair interconnection, various electronic equipment on the network. In a local area network (LAN), transmission of data preferably occurs at high speed. Speeds of 10 million bits per second (10MBPS) are possible with present electronic equipment. A single 2-wire pair is not suitable for such high transmission rates, unless special precautions are taken to avoid "collisions", where data is attempted to be transmitted and received at the same time by one of the electronic equipment.

Known in the art are directional couplers which allow the use of a single pair of wires for interconnecting equipment in a network operating at high speeds. However, such couplers are complex and expensive. Also known in the art is to digitally process the signals received and the signals to be transmitted so that collisions can be avoided. However, digital processing is impractical at very high speeds, such as 10MBPS. Thus, two pairs of cables have been employed to interconnect equipment on LANs; one pair for transmission and one pair for reception.

Such two-pair cabling is wasteful of materials, more expensive to install than single-pair cabling, and exacerbates close-quarter routing where space is at a premium. Furthermore, it differs from the usual one-pair cabling employed in many premises. Thus separate installation for 2-pair cabling is required in buildings already constructed. This installation is expensive and disruptive.

### SUMMARY OF THE INVENTION

The instant invention provides a circuit interconnecting a transceiver to a network in which a one-pair cable interconnects equipment to provide a 10MBPS LAN. In a preferred embodiment, an ordinary twisted-pair of wires, such as is commonly used in telephony for premises wiring, can be used to interconnect equipment in a LAN where such equipment is separated by up to 100 metres.

The interconnect circuit provided by the present invention is very inexpensive and in conjunction with the use of an inexpensive ordinary single twisted-pair (TP) wires, affords a very inexpensive way of interconnecting equipment in a LAN. Yet, the LAN can be used at high-speed transmission rates of 10MBPS. Since most premises are already wired with ordinary TP wires for telephony, the present invention produces an extremely inexpensive, easily-installed, LAN. Changes, additions, and deletions from the network are simplified because of the ease of working with ordinary TP wires.

### BRIEF DESCRIPTION OF THE DRAWING

Fig. 1 is a block diagram showing a Hub-Pod configuration employed in a STAR-LAN topology.

Fig. 2 is a schematic diagram of the circuit of the instant invention providing interconnection of a transceiver to a high-speed LAN in which a single pair of twisted-pair wires interconnects various electronic equipment.

### DETAILED DESCRIPTION OF A PREFERRED EMBODIMENT

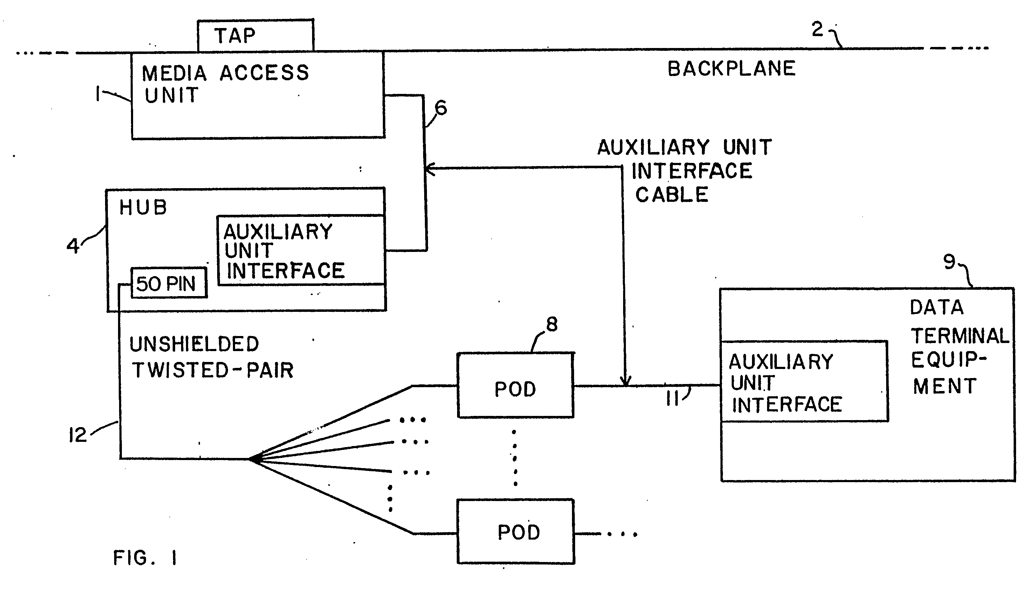

With reference to Fig. 1, a typical installation of a local area network (LAN) having a STAR topology is shown. A media access unit (MAU) 1 is shown tapped into a backplane 2 of the LAN. The backplane 2 may be a fiber optic cable, a coaxial cable or a twisted-pair of wires. The MAU 1 serves to connect a transceiver Hub 4 to the LAN backplane. The Hub 4 has an auxiliary unit interface (AUI) which receives an AUI cable 6 from MAU 1. The Hub 4 performs a repeating function between the LAN backplane 2 and a number of transceiver Pods 8 connected to the Hub.

In the LAN illustrated in Fig. 1, twelve Pods 8 are connected to the Hub 4 via twenty-four unshielded, twisted-pair (TP) wires 12. A 50-pin socket on the Hub serves to receive the 24 TP wires. Each Pod 8 is connected to two TP wires 12 to the Hub 4, thereby providing a four-wire full-duplex interconnection. Each Pod 8 is, in turn, connected to an AUI of data terminal equipment (DTE) 9, via an AUI cable 11. typical DTE is a microcomputer, a workstation, or a data entry terminal.

Both voice and data signals may be carried on the TP wires 12. Transmission rates up to 10 million bits per second (mbps) are to be supported by the LAN shown in Fig. 1. Up to 300 feet of lineal distance is possible between Hub 4 and DTE 9.

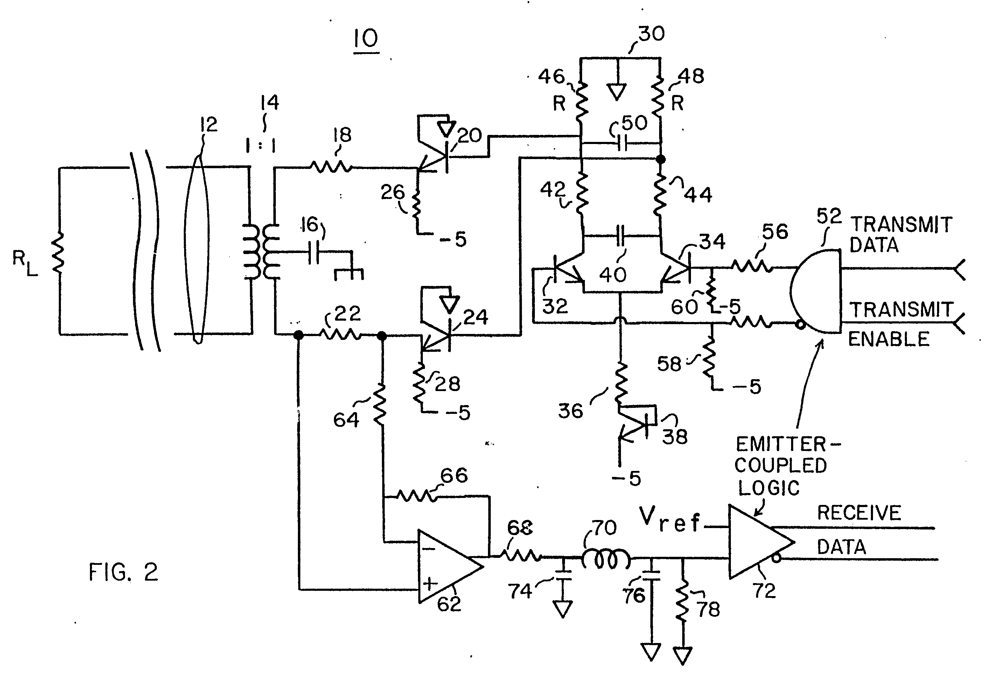

Fig. 2 is a schematic diagram of the circuit 10 of the present invention enabling interconnection of a transmitter and a receiver (transceiver) to a high-speed network in which elements are interconnected by a single pair of wires 12. In a preferred embodiment, the single pair of wires 12 is an ordinary unshielded twisted-pair (TP) used in telephony for premises wiring. Use of such TP wires for high-speed network interconnection is described in the co-pending application entitled "Crosstalk Reduction in Unshielded Twisted-Pair Lines" and this description is incorporated by reference herein. In particular, the transceiver and interconnection circuit 10 of the present invention can be employed in the media access unit 1 and the Hub 4 and Pods 8 shown in Fig. 1, as will be appreciated by those skilled in the art.

Signal lines 12 are connected to the primary terminals of an isolation transformer 14. The secondary winding of transformer 14 is center-tapped and a capacitor 16 is connected between the center-tap terminal of transformer 14 and ground. A resistor 18 is connected between a first terminal of the secondary winding of transformer 14 and the emitter terminal of an NPN transistor 20. A resistor 22 is likewise connected between the second terminal of the secondary winding of transformer 14 and the emitter terminal of an NPN transitor 24.

The collectors of transistors 20 and 24 are connected to ground and their emitters are connected to a source of negative voltage via a resistor 26 and a resistor 28, respectively. The bases of transistors 20 and 24 are connected to the outputs of a differential amplifier 30.

Differential amplifier 30 includes a pair of emitter-coupled NPN transistors 32 and 34. Their common emitter junction is connected to a first terminal of a resistor 36. The second terminal of resistor 36 is connected to a diode-connected NPN transistor 38: The collector and base of transistor 38 is connected to the second terminal of resistor 36, the collector of transistor 38 is connected to a negative-voltage source.

The collectors of transistors 32 and 34 are connected by a capacitor 40: the collector of transistor 32 is also connected to a first terminal of a resistor 42, the collector of transistor 34 is also connected to a first terminal of a resistor 44. The second terminals of resistors 42 and 44 are connected to the bases of transistors 20 and 24, respectively, connected to ground via resistors 46 and 48, respectively, and connected to each other by a capacitor 50. The junction of resistors 42 and 46 and the junctional of resistors 44 and 48 comprise the output terminals of differential amplifier 30.

The bases of transistors 32 and 34 are connected to a true and a complemented output terminal, respectively, of an AND gate 52 via resistors 54 and 56, respectively. A resistor 58 and a resistor 60 are connected between the base of transistor 32 and the base of transistor 34, respectively, and a negative-voltage source. AND gate 52 receives at a first input terminal the data to be transmitted from the transceiver. AND gate 52 receives at a second input terminal a transmit enable (XMIT_EN) signal generated by the transceiver. AND gate 52 is preferably an emitter-coupled logic (ECL) type for fast response.

An operational amplifier (op amp) 62 has its non-inverting input terminal connected to the common connection of resistor 22 and the secondary winding terminal of transformer 14. The op amp 62 has its inverting input terminal connected to the common connection of resistor 22 and the emitter of transistor 24 via a resistor 64. A resistor 66 is connected between the output terminal of op amp 62 and its inverting input terminal.

The output terminal of op amp 62 is connected to a first terminal of a resistor 68. The second terminal of resistor 68 is connected to a first terminal of an inductor 70. The second terminal of inductor 70 is connected to a first input terminal of a comparator 72. A capacitor 74 and a capacitor 76 are connected between the first and second terminals of inductor 70 and ground, respectively. A resistor 78 is also connected between the second terminal of inductor 70 and ground. Elements 68, 70, 74, 76 and 78 comprise a passive low-pass filter (LPF).

Comparator 72 receives at a second input a reference voltage (VREF) and generates a differential received signal at a true and complemented output terminal. This received signal is conducted to the receiver portion of the transceiver. Comparator 72 is preferbly of an ECL type.

Briefly, the operation of circuit 10 is as follows: When the transceiver is receiving data from the network, the XMIT_EN signal is LOW. AND gate 52 is thus disabled causing a LOW signal to be generated at its true output terminal and a HIGH signal to be generated at its complemented output terminal. Accordingly, transistor 32 is conducting and transistor 34 is non-conducting. This, in turn, causes transistor 20 to be non-conducting and transistor 24 to conduct. This, in turn, causes the emitter of transistor 24 to be nearly at ground potential. In a similar manner, the emitter of transistor 20 is held to approximately the level of the negative-voltage source. Accordingly, the inverting terminal of op amp 64 is held at ground and the non-inverting terminal is exposed to the signals received over lines 12 and produced at the secondary of transformer 14. Hence, when the transceiver is receiving (XMIT_EN = LOW) the received signal is applied to the op amp 62 and accordingly to the comparator 72. This signal is then correctly-conducted to the receive section of the transceiver.

When the transceiver is transmitting (XMIT_EN = HIGH) the transistors 20 and 24 are not held to any fixed state - conducting or non-conducting - but simply follow the state of the applied transmit data signal, as the analysis in the preceding paragraph demonstrates. Accordingly, approximately equal voltge appears across resistor 22 during transmission, the voltage equal to approximately half the voltage to be transmitted as applied to the secondary winding of transformer 14. The presence of equal voltages at the inputs to op amp 62 causes it to generate a near-zero output voltage. Thus, the signal to be transmitted is not conducted to the receive section of the transceiver.

Circuit 10 is composed of very inexpensive components which together can be purchased in commercial quantities for less than 50 cents. Yet it performs its function well at high speeds up to 10MBPS. Thus the circuit 10 of the present invention provides an inexpensive way of connecting a transceiver to a single-pair cable interconnecting elements of a LAN.

## Claims

1. A coupling circuit for transceiver generating signals to be transmitted onto a network employing a single pair of conductors (12), interconnecting elements of said network, and receiving signals from said network, said transceiver generating a signal indicative of operation as a transmitter; said coupling circuit coupling said transceiver to impedance-matching means (14) connected to said single pair of conductors (12) and being characterized by:
transmit-sensing means (52) receiving from said transceiver said signals to be transmitted and said transmit indicating signal for generating a first and a second signal having predetermined voltages when said transmit indicating signal is enabled, said first and second signals having a voltage difference representing said signal to be transmitted when said transmit indicating signal is disabled; and
null-means (20,24;26,28;18,22;62), responsive to said first and second signals and to said received signals for generating a third signal having a zero voltage when said first and second signals have said predetermined voltages and having a voltage representing said received signals otherwise, said third signal conducted to said transceiver.

2. The coupling circuit according to claim 1, **characterised** by filter means (68, 74,70,76,78;72) responsive to said third signal for generating said signal conducted to said transceiver.

3. The coupling circuit according to claim 1 or 2, **characterized** in that said transmit-sensing means (52) comprises:
an AND gate (52) receiving at a first input terminal said signals to be transmitted and at a second input terminal said transmit indicating signal and having a true output terminal and a complemented output terminal; and differential amplifier means (72) having a first differential input coupled to said true output terminal of said AND gate (52) and having a second differential input coupled to said complemented output terminal of said AND gate (52) for generating at a first and a second output terminals said first and second signals.

4. The coupling circuit according to claim 3, **characterized** in that said impedance-matching means (14) is a transformer having a primary winding connected to said single pair of conductors (12) and a secondary winding having a first and a second terminal and a center-tapped terminal, wherein said null-means comprises:
first and second NPN transistors (20,24) each having an emitter connected to a source of negative voltage via a resistor (26,28) each having a base receiving said first and second signals, respectively, and each having a collector connected to ground;

first and second resistors (18,22) each having a first terminal connected to said first and second terminals, respectively, of said secondary winding, and each having a second terminal connected to said emitter of said first and second NPN transistors (20,24), respectively; and

operational amplifer means (62) having a non-inverting input connected to said first terminal of said second resistor (22) and an inverting input connected to said second terminal of said second resistor (22) for generating at an output terminal said third signal.

5. The coupling circuit according to claim 2,3 or 4, **characterized** in that said filter means comprises:

low-pass filter means (68,74,70,76,78) receiving said third signal for generating a filtered signal therefrom; and

comparator means (72) receiving at a first terminal said filtered signal and at a second terminal a reference signal having a predetermined voltage for generating at an output terminal said signal conducted to said receiver when said filtered signal exceeds said predetermined voltage.

6. The coupling circuit according to claim 5 wherein said low-pass filter means (68,74,70,76,78) is a passive LC-filter.

7. A high-speed local area network comprising:

a plurality of transceivers (8) interconnected by single unshielded twisted-pair wires (12);

each transceiver generating signals to be transmitted onto said network and receiving signals from said network;

**characterized** in that at least one said transceiver (8) includes collision-avoidance circuit means (10) for coupling said transceiver to said network.

8. The high-speed local-area network according to claim 7, **characterized** in that said collision-avoidance circuit means (10) couples said transceiver (8) to impedance-matching means (14) connected to said single unshielded, twisted-pair wires (12) and in that said transceiver generates a signal indicative of operation as a transmitter, said collision-avoidance circuit means (10) being the coupling circuit according to any one of claims 1 to 6.

FIG. 1

FIG. 2

10

TRANSMIT DATA

TRANSMIT ENABLE

EMITTER-COUPLED LOGIC

RECEIVE DATA

$V_{ref}$

EP 0 338 129 A2